# EUROPEAN PATENT SPECIFICATION

(11) **EP 4 148 293 B1**
(45) Date of publication and mention of the grant of the patent: **25.12.2024**
(21) Application number: 21290056.7
(22) Date of filing: 10.09.2021
(51) Int. Cl.: F16D 55/02, B64C 25/42, B64C 27/12

(54) **AIRCRAFT BRAKE WITH THERMAL FUSE AND METHOD OF OPERATING**
FLUGZEUGBREMSE MIT THERMISCHER SICHERUNG UND VERFAHREN ZUM BETRIEB
FREIN D'AVION AVEC FUSIBLE THERMIQUE ET MÉTHODE DE FONCTIONNEMENT

(43) Date of publication of application: 15.03.2023
(73) Proprietor: Ratier-Figeac SAS, 46101 Figeac Cedex (FR)
(72) Inventor: SARDI, Adil, 46101 Figeac (FR); RAMIREZ, Fabien, 33710 Tauriac (FR); BRION, Patrice, 46100 Lunan (FR); PROUZET, Bertrand, 46100 Figeac (FR)
(74) Representative: Dehns

(56) References cited:
- FR-A1- 2 985 294
- GB-A- 798 952
- US-A- 3 138 406
- US-A- 5 462 137
- US-A1- 2019 136 921
- US-A1- 2019 136 977

## Description

The present disclosure relates to a brake for an aircraft and a method of operating the brake.

It is common to use brakes in an aircraft to brake rotating components. For example, a helicopter may be provided with a brake to rapidly slow the rotor rotation after the engine has been shut down, after landing. The brake may also be used to stop the helicopter rotor from rotating under e.g. gusts of wind, while the helicopter is grounded. Similarly, a brake may be provided on an aircraft propulsion system, such as turbopropellor (turboprop), turbofan, prop fan, open rotor etc. to rapidly slow rotation after the engine has been switched off, after landing. The brake may also be used to stop the rotor from rotating under e.g. gusts of wind, while the aircraft is grounded.

It is possible that the brake may be accidentally applied while the engine or propeller is still running, for example, due to a system failure. This can lead to an abnormally high amount of energy being generated by the brake which can cause excessive heating of the brake, potentially causing a fire or thermally damaging aircraft or engine components.

Such conventional brakes have generally been considered satisfactory for their intended purpose but it is desirable to mitigate the risk of overheating of a brake.

US 2019/136921 A1 discloses a brake for an aircraft according to the preamble of claim 1.

FR 2 985 294 A1 discloses an automatic braking engagement device with a rotatable shaft and a thermal fuse.

GB 798 952 A discloses a parking brake for aircraft turbo-propeller propulsion units.

According to a first aspect, there is provided a brake for an aircraft, the brake comprising: a housing; a shaft defining an axis and extending into the housing; a floating brake disk arranged to rotate with the shaft and arranged to be axially movable, along the axis, within the housing; a static brake pad arranged on a first side of the floating brake disk; a movable brake pad arranged on a second, opposite, side of the floating brake disk; biasing means for moving the movable brake pad relative to the housing to press the movable brake pad against the floating brake disk, and thereby to press the floating brake disk against the static brake pad to apply braking force to the floating brake disk; and a thermal fuse in thermal contact with the static brake pad, the thermal fuse having a fusing temperature, T, above which the thermal fuse fuses, wherein the thermal fuse is arranged such that, before it fuses, the static brake pad is axially fixed relative to the housing, and after it fuses, the static brake pad is free to move axially relative to the housing away from the floating brake disk.

The floating brake disk is considered to be "floating" because it is axially movable relative to the housing. This floating behaviour relative to the housing may be achieved in different ways. For example, the floating brake disk may be axially movable relative to the shaft, and the shaft may be axially fixed relative to the housing. In this example, the brake disk may, for example, be connected to the shaft via splines that allow movement of the floating brake disk along the shaft axis ensuring that rotation of the shaft causes rotation of the floating brake disk. Alternatively, the floating brake disk may be axially fixed to the shaft that allow movement of the floating brake disk along the shaft axis ensuring that rotation of the shaft causes rotation of the floating brake disk. Alternatively, the floating brake disk may be axially fixed to the shaft or formed integral with the shaft, and wherein the shaft is axially movable relative to the housing.

The static brake pad may be free to move axially along a first axial length after the thermal fuse has fused; and a hard stop is formed in the housing at a location axially in-between the static brake pad and the movable brake pad. The movable brake pad may comprise a flange having a flange surface arranged axially aligned with and facing the hard stop such the flange cannot move axially past the hard stop. A second axial length may be defined as an axial length between the flange surface and the hard stop at a position where the movable brake pad first makes contact with the floating brake disk; wherein the first length is longer than the second length. As such, the static brake pad may always have room to move back from the floating brake disk, even when the movable brake pad is at its furthest limit of travel (i.e. abutting the hard stop).

The thermal fuse may have an axial length that is equal to or greater than the first axial length.

The thermal fuse may comprise a eutectic material; wherein the fusing temperature, T, is a melting temperature of the eutectic material.

The thermal fuse may comprise a continuous-fibre reinforced composite, CFRC, material that comprises: one or more fibres, and a resin having a glass transition temperature, Tg; wherein the fusing temperature, T, is the glass transition temperature, Tg. The resin may be a thermoplastic resin or a thermoset resin.

The thermal fuse may further comprise a thermally conductive material extending at least partially along a length of the thermal fuse; wherein the thermally conductive material is selected to have a higher thermal conductivity than a thermal conductivity of the CFRC material.

The thermal fuse is in direct physical contact with the static brake pad.

The brake may further comprise: a member in abutment with the static brake pad, whereby, in an initial position, the member abuts the static brake pad and prevents axial movement of the static brake pad relative to the housing; a spring may be arranged to bias the member away from the initial position and towards a second position in which the member no longer prevents axial movement of the brake pad relative to the housing; wherein the thermal fuse is arranged to hold the member in the initial position, against the bias of the spring, until the thermal fuse fuses.

The second position may be located radially inwards, towards the shaft axis (X), from the initial position, and the member may have a slanted face such that a radially outward portion of the member, radially outward from the shaft axis (X), is spaced apart from the static brake pad in the initial position. This may assist sliding of the member to the second position, even when axially loaded from the static brake pad.

The member may be a first end of a rod; wherein the rod is arranged to be pivotable, under the bias from the spring around a pivot; wherein the thermal fuse is arranged to hold the rod in the initial position until the thermal fuse fuses; and wherein the spring is arranged to bias the rod to pivot around the pivot point to the second position after the thermal fuse has fused.

The member may be a piston, and the spring may be arranged within the housing to bias the piston radially inwards towards the shaft axis; wherein the thermal fuse is arranged radially inward of, and in abutment with, the piston when the piston is in the initial position.

The brake may comprise a plurality of thermal fuses, located at a plurality of positions around a circumference of the static brake pad.

According to a second aspect, there is provided a method of operating the aircraft brake of the first aspect, the method including mounting the thermal fuse in the housing to fix the static brake pad while the thermal fuse is unfused, and fusing the thermal fuse using heat generated between the static brake pad and the floating brake disk to allow the static brake pad to move axially relative to the housing away from the floating brake disk.

Certain embodiments of the present disclosure will now be described in greater detail by way of example only and with reference to the accompanying drawings in which:
Figure 1 shows an aircraft brake according to the prior art;
Figure 2 shows an aircraft brake in the disengaged position;
Figure 3 shows an aircraft brake in the engaged position;
Figure 4 shows an aircraft brake having worn brake pads in the engaged position;
Figure 5 shows an aircraft brake after an overheating event;
Figure 6 shows an example thermal fuse;
Figures 7A and 7B show an alternative thermal fuse arrangement for the aircraft brake, both before and after an overheating event;
Figures 8A and 8B show a different perspective the alternative thermal fuse arrangement; and
Figures 9A and 9B show a yet further aircraft brake.

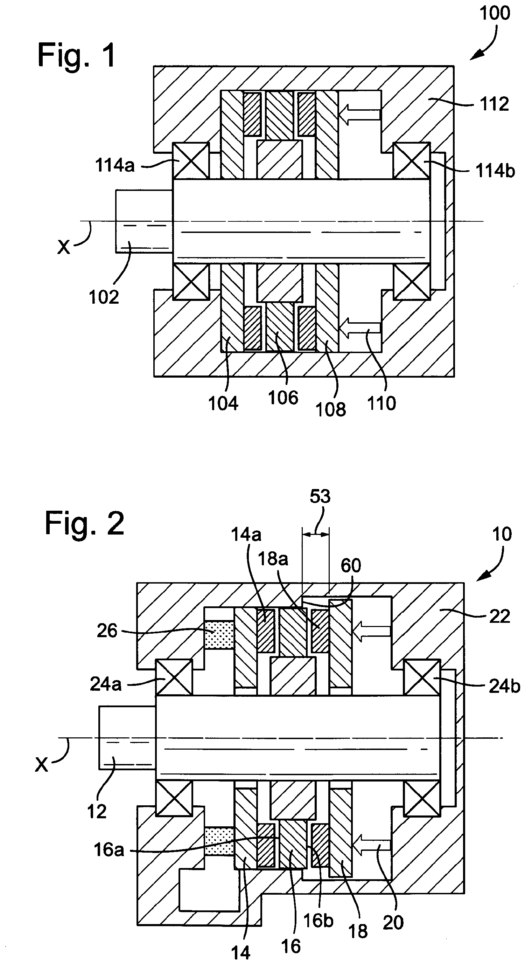

Figure 1 shows a known design of aircraft brake 100. The aircraft brake 100 comprises a shaft 102 extending into a brake housing 112. Inside the brake housing 112, a floating brake disk 106 is mounted on the shaft 102, e.g. by splines or teeth, such that the floating brake disk 106 may move axially along a shaft axis Y, and is fixed to rotate with the shaft 102. On one axial side of the floating brake disk 106 is a static brake pad 104. The static brake pad 104 is connected to the housing and is fixed against axial movement and is fixed against rotation within the housing. On the opposite axial side of the floating brake disk 106 is a movable brake pad 108. The movable brake pad 108 is fixed against rotation within the housing 112 (e.g. by splines), and may move axially within the housing 112 under force provided by biasing means 110. The biasing means 110 may be an electric actuator or a hydraulic actuator for example. A pair of bearings 114a,b support the shaft 102 for rotation within the housing 112. The shaft 102 connects to a rotating part of an aircraft, such as to a propeller or rotor (not shown), such that when the brake 100 brakes rotation of the shaft 102, this brakes rotation of the propeller or rotor.

To activate the aircraft brake 100, the biasing means 110 is activated so as to push the movable brake pad 108 axially against the floating brake disk 106. The pressure from the movable brake pad 108 pushes the floating brake disk 106 along the shaft 102 to abut against the static brake pad 104. Once the floating brake disk 106 is in contact with the static brake pad 104, further pressure applied by the biasing means 110 squeezes the floating brake disk 106 between the two brake pads 104,108. The friction between these parts then acts to slow any rotation of the floating brake disk and thereby slow rotation of the shaft 102. When the shaft 102 is already static, application of the brake 100 merely acts to prevent rotation from starting (e.g. due to gusts of wind acting on a rotor connected to the shaft 102).

It is common to design such an aircraft brake 100 for normal conditions under which it can slow down a freely-rotating rotor (i.e. a rotor that is spinning but is not currently being actively driven by an aircraft engine), and such that it can prevent rotation of a static rotor e.g. under gusts of wind. However, if the rotor (and thereby the shaft 102) is being driven in rotation, e.g. by an aircraft engine, when the brake 100 is applied, an excessive amount of heat may be generated in the brake 100. This may be termed abnormal operation of the brake 100. This excessive amount of heat may heat up the overall brake 100, in particular the brake housing 112, to be hot enough to cause a fire or to damage nearby aircraft components. It is desirable to avoid excessive heating in a brake unit, particularly under abnormal operation.

Figure 2 shows a new design of brake for an aircraft, where the brake is not currently applying braking force.

Figure 2 shows a brake 10 comprising a shaft 12, a static brake pad 14, a floating brake disk 16, a movable brake pad 18, biasing means 20, and a housing 22.

Inside the brake housing 22, the floating brake disk 16 is mounted on the shaft 12, e.g. by splines or teeth, such that the floating brake disk 16 may move axially along a shaft axis X, and is fixed to rotate with the shaft 12. On a first axial side 16a of the floating brake disk 16 is a static brake pad 14. The static brake pad 14 is connected to the housing 22 and is (initially) fixed against axial movement and is fixed against rotation within the housing 22. On the opposite axial side (i.e. second side 16b) of the floating brake disk 16 is a movable brake pad 18. The movable brake pad 18 is fixed against rotation within the housing 112 (e.g. by splines), and may move axially within the housing 22 under force provided by biasing means 20. The biasing means 20 may be an electric actuator or a hydraulic actuator for example. Any suitable means for moving the brake pad 18 to bias against the floating brake disk may be used. A hard stop 60 is formed in the housing 22 to limit axial movement of the movable brake pad 18.

In an alternative, the brake disk 16 may be secured to the shaft (e.g. via splines) or the shaft 12 may be integrally formed with the brake disk 16 and, in this case, the shaft 12 may be floating within the housing 22, i.e. the shaft 12 as a whole may move axially within the housing along axis X. As such, the brake disk 16 is considered to be "floating" in this case, as it is axially movable within the housing under pressure from the movable brake pad 18.

A pair of bearings 24a,b support the shaft 12 for rotation within the housing 22. The shaft 12 may be connected to a rotating part of an aircraft, such as to a propeller or rotor (not shown), such that when the brake 10 brakes rotation of the shaft 12, this brakes rotation of the propeller or rotor.

As described in detail later, the static brake pad 14 is held axially static only during normal operation of the brake 10. When excessive heating occurs within the brake 10, the static brake pad 14 becomes free to move axially away from the movable brake pad 16.

The movable brake pad 18 comprises a braking surface 18a that faces towards the floating brake disk 16. The static brake pad comprises a braking surface 14a that faces towards the floating brake disk 16.

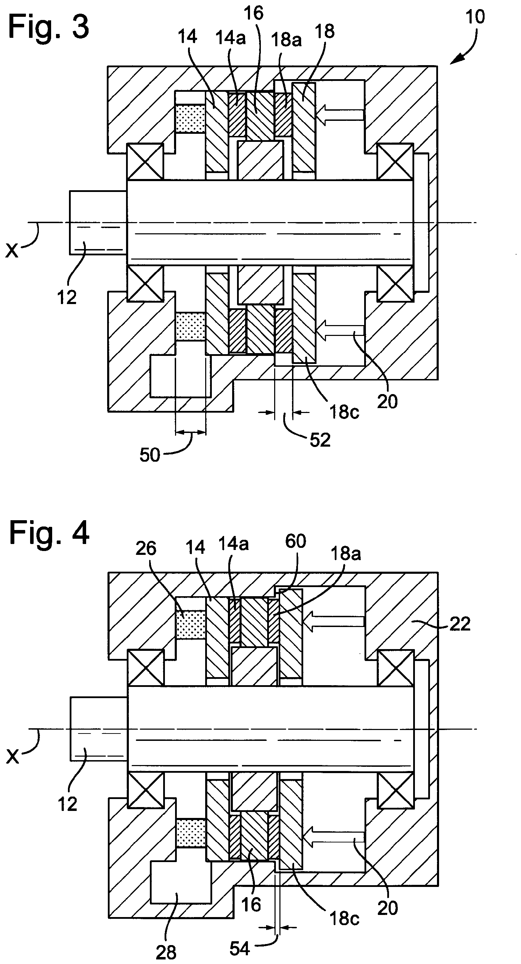

To activate the aircraft brake 10, the biasing means 20 is activated so as to push the movable brake pad 18 axially against the floating brake disk 16. The pressure from the movable brake pad 18 pushes the floating brake disk 16 axially along the shaft 12 to abut against the static brake pad 14. Once the floating brake disk 16 is in contact with the static brake pad 14, further pressure applied by the biasing means 20 squeezes the floating brake disk 16 between the two brake pads 14,18. This position of the brake 10 is shown in Figure 3. The friction between the braking surface 18a of the movable brake pad 18 with the floating brake disk 16, and between the braking surface 14a of the static brake pad 14, acts to slow any rotation of the floating brake disk 106 and thereby slow rotation of the shaft 102. When the shaft 102 is already static, application of the brake 10 merely acts to prevent rotation from starting (e.g. due to gusts of wind acting on a rotor connected to the shaft 12). The braking surface 18a of the movable brake pad 18 may move axially beyond the hard stop, but the movable brake pad 18 may not move axially past the hard stop 60. This may be achieved, e.g. as shown in Figure 3, by having the braking surface 18a extend axially outward from the brake pad 18, and have the braking surface 18a located radially inward from an outer edge of the movable brake pad 18. The brake pad 18 may thus be considered to have a flange 18c extending radially outward. The flange 18c may eventually come into contact with the hard stop 60 and this may prevent further axial movement of the movable brake pad 18. When the movable brake pad first contacts the floating brake disk 16, the flange 18c is axially spaced from the hard stop 60 by a distance 52. When the brake 10 is not applying braking force, the movable brake pad 18 is held at a distance 53 from the floating brake disk 16. This distance 52 is defined as the distance between the flange 18c of the movable brake pad 18 and the hard stop 60, and this distance 53 is larger than the aforesaid distance 52 during the braking position.

A thermal fuse 26 is located between the static brake pad 14 and the housing 22. In the example brake 10 shown in Figures 2-5, the thermal fuse 26 sits directly in abutment with, at one end, the housing 22, and, at the other end, with the static brake pad 14. As described in detail later, the thermal fuse 26 may be located at different positions instead.

During normal operation of the brake 10, the thermal fuse 26 holds the static brake pad 14 at a fixed axial position (i.e. a fixed position along the axis X, defined by the shaft 12) within the housing 22. The thermal fuse 26 is located on the side of the static brake pad 14 opposite the braking surface 14a.

Specific examples of suitable thermal fuses will be described later. The thermal fuse 26 is designed to fuse at a well-defined predetermined temperature, T, at which point it loses structural integrity. For example, the thermal fuse 26 may melt, disaggregate, or buckle at the predetermined temperature T.

The brake 10 is designed such that, under normal braking operations, the amount of heat dissipated in the brake 10 during braking will not cause the thermal fuse 26 to exceed the predetermined temperature T. However, if the brake 10 experiences abnormal braking conditions, for example, if the brake 10 is activated when the shaft 12 is still being actively driven by an aircraft engine, then the temperature generated by friction between the floating brake disk 16 and the brake pads 14,18 may rise excessively high and may also rise very quickly. When the temperature of the thermal fuse 26 rises above the temperature T, the thermal fuse 26 fuses (i.e. loses structural integrity) and the static brake pad 14 is then free to move axially away from the floating brake pad 16. This disengages the brake 10, i.e. it prevents the brake 10 from further resisting rotation of the shaft 12, and this prevents further heating of the brake 10, even if the shaft 12 is still being driven in rotation e.g. by an aircraft engine.

The predetermined temperature T may be chosen so as to limit an overall temperature rise of the housing 22 under abnormal braking conditions. That is, when the thermal fuse 26 fuses at the predetermined temperature T, no further energy is dissipated as heat within the brake 10, and the heat energy that has already been generated in e.g. the brake pads 14,18 may gradually spread out to the housing 22.

As shown in Figure 3, an axial length 50 is provided behind the static brake pad 14, the static brake pad 14 may move along this axial length 50 after the thermal fuse 26 has fused. In the embodiment shown in Figures 2-5, the axial length 50 is substantially equal to an axial length of the thermal fuse 26. Alternatively, there may be a recess (not shown) formed in one or both of the housing 22 and the movable brake pad 14, for receiving an end of thermal fuse 26 (e.g. to securely mount the fuse), in which case the overall length of the thermal fuse 26 may be slightly greater than the axial length 50.

When the brake 10 is first put into service, the braking surface 18a of the movable brake pad 18 has a first thickness. During the operational life of the brake 10, the braking surface 18a will gradually wear down and become thinner. Similarly, during the operational life of the brake 10, the braking surface 14a of the static brake pad will wear down and become thinner.

Figure 4 shows the brake 10 with worn down braking surfaces 14a,18a. After the braking surfaces 14a, 18a have worn down somewhat, but while the thermal fuse 26 is still intact, the movable brake pad 18 is still able to squeeze the floating brake disk 16 against the static brake pad 14, without the flange 18c of the movable brake pad 18 coming into abutment with the hard stop 60. Of course, due to the thinner braking surfaces 14a, 18a, the distance 54 between the flange 18c and the hard stop 60 during when the brake 10 is applied is smaller than when the brake 10 was first put into service.

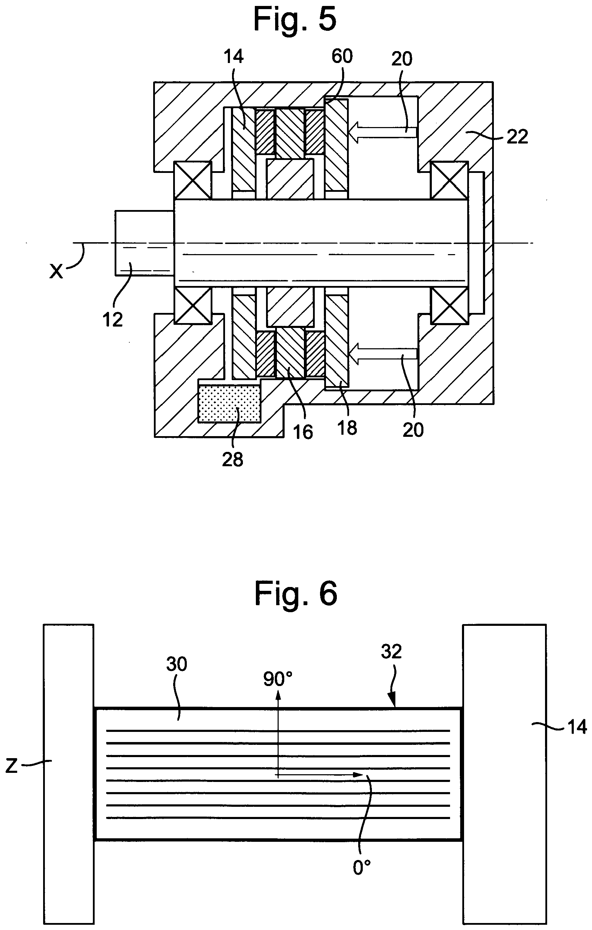

Figure 5 shows the brake 10 after abnormal braking conditions have led to the thermal fuse 26 fusing. This Figure shows one example in which the thermal fuse 26 melts. Other thermal fuses 26, such as some of those described below, may not melt but may instead lose structural integrity or disaggregate and, for example, buckle under axial loading. Thus, Figure 5 shows merely one example of the brake 10 after fusing of the thermal fuse 26.

In Figure 5, the thermal fuse 26 has melted due to excessive heat generation in the static brake pad 14. This heat has been generated at the interface where the static brake pad 14 meets the floating brake disk 16, and this generated heat heats up the brake pad 14, which, by thermal conduction, heats up the thermal fuse 26. When the temperature in the thermal fuse 26 reaches the predetermined temperature, T, the thermal fuse 26 melts and, under the action of gravity, falls into a space 28 provided in the housing 22. The space 28 is positioned within the housing 22 so as to receive the molten thermal fuse material when the thermal fuse 26 melts. The size of the space 28 is also chosen to accommodate the amount of thermal fuse material.

When the thermal fuse 26 has fused, as shown in Figure 5, the static brake pad 14 is then free to move axially away from the floating brake disk 16. During braking, the movable brake pad 18 is pushing against the floating brake disk 16 and therefore loading axially against the static brake pad 14 as well. However, the range of motion of the movable brake pad 18 towards the floating brake disk 16 and towards the static brake pad 14 is ultimately limited by the hard stop 60. The movable brake pad 18 will engage with the hard stop 60 before the static brake pad 14 has moved the full length 50. That is, when the movable brake pad 18 is stopped from further axial movement by the hard stop 60, the static brake pad 14 still has space to move back further from the floating brake disk 16. As a result, the floating brake disk 16 will no longer be squeezed between the brake pads 14,18, even if the biasing means 10 has pushed the movable brake pad to its furthest possible position (i.e. to the hard stop 60). The floating brake disk 16 may move axially along the shaft 12. Once the floating brake pad 16 is no longer being squeezed from the first side 16a (i.e. where the static brake pad 14 was), the floating brake pad 16 will also no longer press strongly against the movable brake pad 18 either. As such, there will be very little, if any, frictional-heat generated at interface between the movable brake pad 18 and the floating brake disk 16 after the thermal fuse 26 has fused. In this manner, the brake 10 will rapidly disengage after the thermal fuse 26 fuses and there will be no further significant heat generation within the brake 10. This action is automatic when the temperature of the thermal fuse 26 rises above the predetermined temperature, T, and does not require, for example, any sensor-based monitoring of the brake temperature.

The thermal fuse 26 may be a ring-shaped piece that circumscribes the shaft 12. Alternatively, multiple thermal fuses 26 may be provided at different circumferential locations around the static brake pad 14, to act as "legs" spacing the static brake pad 14 from the housing 12. In the case of multiple thermal fuses, each thermal fuse 26 may be a cuboid or cylinder shape.

The thermal fuse 26 may be a eutectic material. A eutectic material is a material (typically a metal alloy) formed from two or more components, where both components within the alloy melt at the same temperature. As such, the overall eutectic material may have a well-defined melting point. Eutectic materials may exhibit very low creep under loading and may exhibit high thermal stability up to the melting temperature. This helps ensure the thermal fuse 26 holds the static brake pad 14 in a fixed position, even under braking loads and even under the heating experienced during normal operation.

In another example, shown in Figure 6, the thermal fuse 26 may be formed from a continuous-fiber-reinforced composite (CFRC) material 30. For example, the CFRC material may be formed in a rod-shape or a cylinder. A CFRC material typically comprises a plurality of high-strength fibres, optionally woven together, that have been impregnated with a resin. The resin may be a thermoplastic. Thermoplastics have a glass transition temperature and this temperature may be well-defined for certain thermoplastics. Below the glass transition temperature, the thermoplastic may be essentially solid and have significant structural stiffness. Above the glass transition temperature, the thermoplastic may rapidly lose stiffness and become soft. Alternatively, the resin may be a thermoset resin having a glass transition temperature, Tg. Above the glass transition temperature, Tg, the thermoset resin may rapidly lose stiffness.

The example thermal fuse 26 shown in Figure 6 is made from a CFRC material having two fibre directions, where the fibres in the first direction extending at 90 degrees to fibres in the direction. That is, the fibres in the first direction extend in an axial direction along an axis Z, which is a long axis of the rod-shaped thermal fuse 26. The fibres in the second direction extend circumferentially around the axis Z. When in place within the brake 10, the axis Z of the thermal fuse 26 of shown in Figure 5 is parallel to the shaft axis X. This means that the loading forces on the thermal fuse 26, from the biasing means 10 squeezing the brake pads 14,18, extends along the axis Z. The fibres at 90 degrees are optional. As such, in an alternative, the CFRC material may be a unidirectional CFRC material, where fibres only extend in a single direction within the material. In this example, the fibres may be oriented along the axis Z of the thermal fuse 26.

While the temperature remains below the glass transition temperature, the thermal fuse 26 of Figure 6 has sufficient stiffness to hold the static brake pad 14 in place under loading forces from the biasing means 10. When abnormal braking conditions occur, such that the thermal fuse 26 of Figure 6 heats up above the glass transition temperature of the resin, the thermal fuse 26 loses structural integrity and will buckle under the aforesaid loading forces. At that point, the static brake pad 14 may move axially away from the floating brake disk 16 and this stops further heat generation in the brake 10.

CFRC materials may have very low creep under loading and may be very stable right up to the glass transition temperature. These properties mean that a thermal fuse 26 formed from CFRC material may comfortably withstand the loading and heating under normal conditions of the brake 10, without noticeable degradation unless and until the predetermined temperature is exceeded.

Some CFRC materials have low thermal conductivity. This can lead to the situation where a portion of the thermal fuse 26 nearest the static brake pad 14 is at a higher temperature (possibly at a temperature above the predetermined temperature), while a portion distal from the static brake pad 14 may be at a lower temperature (possibly below the predetermined temperature). In this case, the thermal fuse 26 may not fuse all at once, but may only partially fuse or fuse in stages. To help ensure the thermal fuse 26 fuses substantially all-at-once, the thermal fuse shown in Figure 6 may further comprise a thermally conductive material 32, such as a metal or a liquid, that has a higher thermal conductivity than the CFRC material. The thermally conductive material 32 depicted in Figure is a sheath over the outer surface of the CFRC material 30. However, the thermally conductive material may alternatively extend through the middle of the CFRC material 30. The thermally conductive material 32 may be a metal sheath. Alternatively, the thermally conductive material may be a liquid stored in a cavity defined by the CFRC material 30. The thermally conductive material 32 can transfer heat quickly along a length of the thermal fuse 26. This may ensure that the resin nearest the static brake pad 14 is at the same, or approximately the same, temperature as resin distal from the static brake pad 14 and, as a consequence, the thermal fuse 26 thus formed may be more certain to fuse all at once (e.g. when the temperature rises above the glass transition temperature). It is desirable, but not essential, that the thermally conductive material 32 is in direct abutment with the static brake pad 14 to ensure rapid and even heating of the thermal fuse 26.

In Figures 2-5, the thermal fuse 26 directly abuts a side of the static brake pad 14 opposite the floating brake disk 16. The thermal fuse 26 is shown abutting, at one end thereof, the housing 22, and, at the other end thereof, the static brake pad 14.

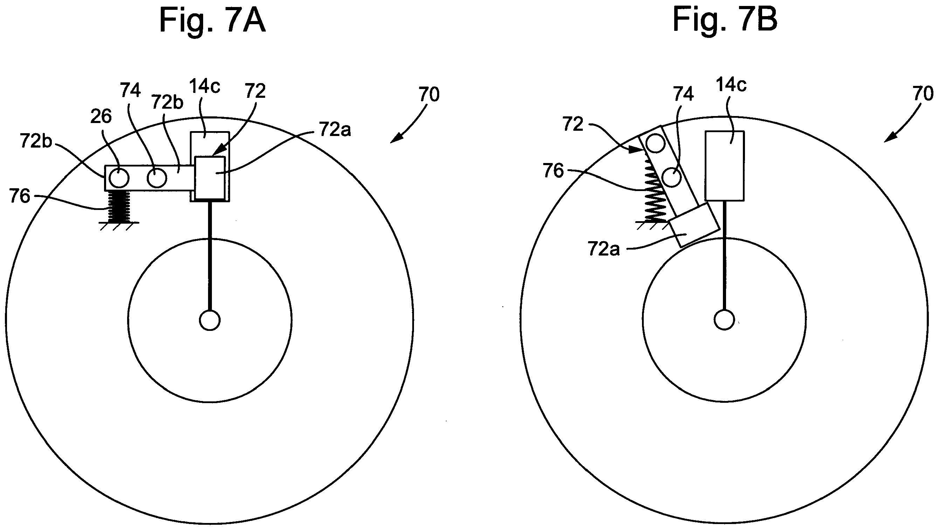

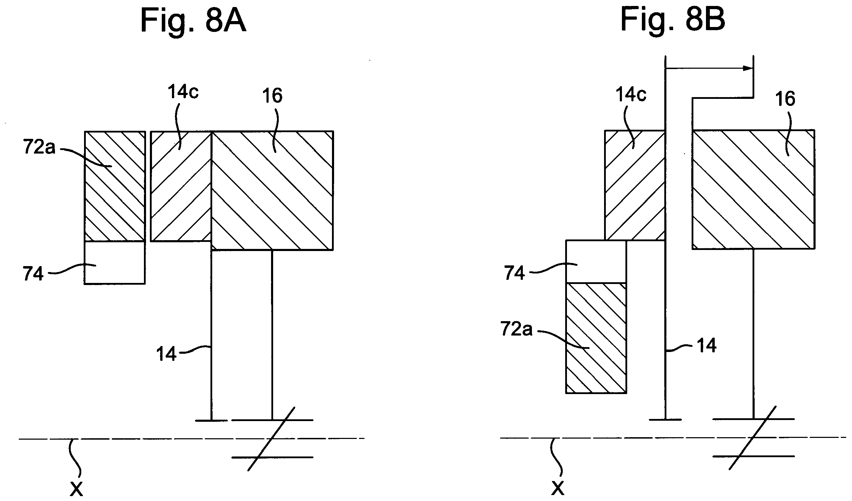

Figures 7A, 7A, 8A, and 8B show an alternative design of aircraft brake. The brake 70 shown in these Figures is the same as the brake 10 described above in relation to Figures 2-5, except for the region around the thermal fuse 26. As such, the brake 70 has the same arrangement of the shaft 12, the static brake pad 14, the floating brake disk 16, the movable brake pad 18, and the biasing means 20 as described above in relation to Figures 2-5.

Figures 7A and 8A show the brake 70 before any abnormal operation (i.e. before any overheating event that fuses the thermal fuse 26). In this initial position, a protrusion 14c of the static brake pad 14 abuts against a first end 72a of a rod 72. The first end 72a of the rod (initially) prevents axial movement of the static brake pad 14 within the housing 22. The rod 72 has a second end 72b and a spring 76 is connected to the rod 72 near the second end 72b. A pivot point 74 is located in between the first end 72a and the second end 72b of the rod 72. The spring 76 biases the rod 72 to pivot around the pivot point 74 but, in the initial position, the thermal fuse 26 prevents pivoting of the rod 72.

As such, in the initial position, the rod 72 is held such that the first end 72a abuts the protrusion 14c of the static brake pad 14. The thermal fuse 26 extends from the housing 22 into the rod 72 at a location near where the spring 76 abuts the rod 72. While the thermal fuse 26 has its structural integrity, it acts as a pin extending into the rod 72 and the strength of the pin prevents pivoting of the rod 72 under the action of the spring 76.

When an abnormal braking operation occurs, such that excessive heat is generated at the brake pads 14,18, heat generated in the static brake pad 14 is thermally conducted to the thermal fuse 26. When the temperature of the thermal fuse 26 exceeds the predetermined temperature, T, the thermal fuse 26 fuses. After fusing, the thermal fuse 26 no longer resists pivoting of the rod 72 under the biasing force of the spring 76. As such, the spring 76 now causes the rod 72 to pivot in a plane normal to the shaft axis X. This pivoting movement moves the first end 72a of the rod 72 away from its abutment with the static brake pad 14. This position is shown in Figures 7B and 8B. The static brake pad 14 is thereafter free to move (e.g. under loading forces from the movable brake pad 18, transmitted through the floating brake disk 16) axially away from the floating brake disk 16. In the same manner as described above in relation to Figures 2-5, when the static brake pad 14 is free to move away from the floating brake disk 16, this disengages the brake 70 and thereby prevents further heat generation via friction between the brake pads 14,18 and the floating brake disk 16.

To assist the rod 72 in sliding relative to the static brake pad 14 under the bias of the spring 76, after the thermal fuse 26 has fused, a portion of the rod end 72a may have a slightly slanted face in contact with the static brake pad 14 such that a radially outward region of the slanted face (radially outward from the shaft axis X) is slightly spaced apart from the static brake pad 14. This slant may allow the rod end 72a to slide more freely radially inwards to a position where it no longer prevents movement of the static brake pad 14 away from the floating brake disk 16. This may assist the rod 72 in moving without requiring any lubricant between the rod 72 and static brake pad 14.

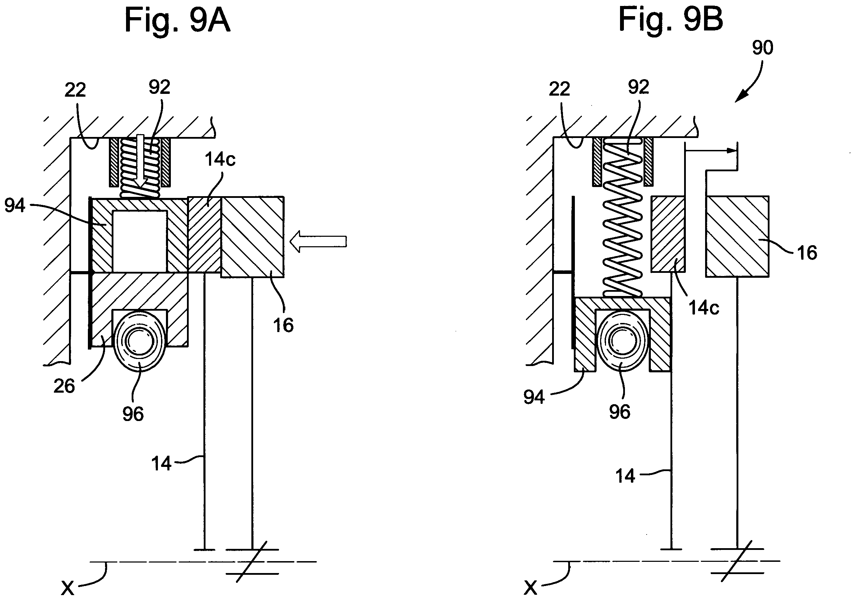

Figures 9A and 9B show yet a further design of brake 90. The brake 90 shown in these Figures is the same as the brake 10 described above in relation to Figures 2-5, and the same as the brake 70 described in relation to Figures 7A-8B, except for the region around the thermal fuse 26. That is, the brake 90 has the same arrangement of the shaft 12, the static brake pad 14, the floating brake disk 16, the movable brake pad 18, and the biasing means 20 as described above in relation to Figures 2-8B.

In the example shown in Figure 9A, before any abnormal braking operation has occurred, a spring 92 is compressed between the housing 22 and a piston 94. The compressed spring 92 biases the piston 94 to move in a generally radially-inward direction, where "radially-inward" means towards the axis X of the shaft 12. The thermal fuse 26 rests between the piston 94 and a pin 96 connected to the housing 22. Before the thermal fuse 26 fuses, its structural integrity prevents the piston 94 from moving radially inward under the bias of the spring 92. In this example brake 90, the protrusion 14c of the static brake pad 14 rests against the piston 94, such that the piston 94 prevents axial movement of the static brake pad 14 within the housing 22.

When an abnormal braking operation occurs such that excessive heat is generated at the brake pads 14,18, heat from the static brake pad 14 is conducted to the thermal fuse 26. When the temperature of the thermal fuse 26 exceeds the predetermined temperature, T, the thermal fuse 26 loses structural integrity such that it no longer prevents movement of the piston 94 under action of the spring 92. The spring 92 therefore pushes the piston 94 generally radially inwardly and this moves the piston 94 away from its abutment with the static brake pad 14. The piston 94 may be pushed, for example, so as to come into abutment with the pin 96 that previously supported the thermal fuse 26 (i.e. before the thermal fuse 26 fused).

This then allows the static brake pad 14 (e.g. under loading forces from the movable brake pad 18, transmitted through the floating brake disk 16) to move axially away from the floating brake disk 16. In the same manner as described above in relation to Figures 2-8B, when the static brake pad 14 can move away from the floating brake disk 16, this disengages the brake 90 and thereby prevents further heat generation via friction between the brake pads 14,18 and the floating brake disk 16.

To assist the piston 94 in sliding relative to the static brake pad 14 under the bias of the spring 92, after the thermal fuse 26 has fused, the piston 94 may have a slightly slanted face in contact with the static brake pad 14 such that a radially outward region of the slanted face (radially outward from the shaft axis X) is slightly spaced apart from the static brake pad 14. This slant may allow the piston to slide more freely radially inwards to a position where it no longer prevents movement of the static brake pad 14 away from the floating brake disk 16. This may assist the piston 94 in moving without requiring any lubricant between the piston 94 and static brake pad 14.

The reader will appreciate that in each design described herein above in relation to Figures 2-9B, the thermal fuse 26, in its non-fused state, prevents axial movement of the static brake pad 14 away from the floating brake disk 16. Further, in each design, when the thermal fuse 26 fuses, the static brake pad 14 is thereafter free to move axially away from the floating brake disk 16 and this therefore disengages the brake and prevents further heat generation by friction between the brake pads 14,18 and the floating brake disk 16.

In the arrangements shown in Figures 7A-9B, the thermal fuse 26 is in thermal contact with the static brake pad 14, but is not necessarily in direct physical abutment with the static brake pad 14.

In the example shown in Figures 2-5, frictional heat generated at the interface between the static brake pad 14 and the floating brake disk 16 travels through the thickness of the static brake pad 14 before heating the thermal fuse 26.

In the example shown in Figures 7A-8B, the frictional heat generated at the interface between the static brake pad 14 and the floating brake disk 16 travels through the thickness of the static brake pad 14 before heating the rod 72, and the heat travels through the rod 72 to the thermal fuse 26.

In the example shown in Figures 9A and 9B, frictional heat generated at the interface between the static brake pad 14 and the floating brake disk 16 travel through the thickness of the static brake pad 14 to heat the piston 94, and the heat travels through the piston 74 to the thermal fuse 26.

Any of the thermal fuse 26 compositions (e.g. a eutectic material, a CFRC material etc.) described hereinabove, may be used with any of the designs of brake 10,70,90 depicted in Figures 2-9B.

While the above has been described in relation to a brake having a single movable brake pad and a single floating brake disk, the present arrangement could equally work with a stacked brake in which, there is the static brake pad and thermal fuse (i.e. as described above) at one end, and then a plurality of floating brake disks interleaved with a plurality of movable brake pads. At the opposite end, there is a final movable brake pad that is driven by biasing means, e.g. an actuator. When the movable brake pad driven by biasing means is driven in a direction towards the static brake pad, the plurality of floating brake disks and plurality of (other) movable brake pads are all squeezed together to brake rotation of the shaft. As above, if the temperature of the thermal fuse exceeds the predetermined temperature, it will fuse and the movable brake pad will be able to move axially away from the stack of movable brake pads/floating brake disks, so as disengage the brake.

### List of References

- 10: brake
- 12: shaft
- 14: static brake pad
- 14a: braking surface (of static brake pad)
- 14c: protrusion (of static brake pad)
- 16: floating brake disk
- 16a: first side (of floating brake disk)
- 16b: second side (of floating brake disk)
- 18: movable brake pad
- 18a: braking surface (of movable brake pad)
- 18c: flange (of movable brake pad)
- 20: biasing means (e.g. actuator)
- 22: housing
- 24a,b: bearings
- 30: continuous-fiber-reinforced-composite (CFRC)
- 32: thermally conductive material
- 50: axial length of movement available to static brake pad 14 after fusing of the thermal fuse
- 52: distance (between flange 18c and the hard stop 60 during braking)
- 53: distance (between flange 18c and the hard stop 60 when not braking)
- 54: distance (between flange 18c and the hard stop during braking with worn brake pads)
- 70: alternative design of brake
- 72: rod
- 72a: rod first end
- 72b: rod second end
- 74: pivot point
- 76: spring
- 90: further alternative design of brake
- 92: spring
- 94: piston
- 96: pin
- 100: prior art brake
- 102: prior art shaft
- 104: prior art static brake pad
- 106: prior art floating brake disk
- 108: prior art movable brake pad
- 110: prior art biasing means
- 112: prior art housing
- 114a,b: prior art bearings
- X: axis (of shaft 12)
- Y: axis (of shaft 102)
- Z: axis (of thermal fuse 26)

## Claims

1. A brake (10,70,90) for an aircraft, the brake comprising:
a housing (22);
a shaft (12) defining an axis (X) and extending into the housing;
a floating brake disk (16) arranged to rotate with the shaft and arranged to be axially movable, along the axis (X), within the housing (22);
a static brake pad (14) arranged on a first side (16a) of the floating brake disk (16);
a movable brake pad (18) arranged on a second, opposite, side (16b) of the floating brake disk (16);
biasing means (20) for moving the movable brake pad relative to the housing to press the movable brake pad against the floating brake disk, and thereby to press the floating brake disk against the static brake pad (14) to apply braking force to the floating brake disk;
the brake (10, 70, 90) for an aircraft **characterised by** further comprising:
a thermal fuse (26) in thermal contact with the static brake pad (14), the thermal fuse having a fusing temperature, T, above which the thermal fuse fuses,
wherein the thermal fuse is arranged such that, before it fuses, the static brake pad is axially fixed relative to the housing, and
after it fuses, the static brake pad is free to move axially relative to the housing away from the floating brake disk.

2. The brake for an aircraft according to claim 1, wherein the floating brake disk (16) is axially movable relative to the shaft (12), and wherein the shaft (12) is axially fixed relative to the housing (22); or
wherein the floating brake disk is axially fixed to the shaft (12) or formed integral with the shaft (12), and wherein the shaft (12) is axially movable relative to the housing (22).

3. The brake for an aircraft according to claim 1 or 2, wherein the static brake pad is free to move axially along a first axial length (50) after the thermal fuse (26) has fused;
wherein a hard stop (60) is formed in the housing at a location axially in-between the static brake pad (14) and the movable brake pad (18),
wherein the movable brake pad (18) comprises a flange (18c) having a flange surface arranged axially aligned with and facing the hard stop (60) such the flange (18c) cannot move axially past the hard stop;
wherein a second axial length (52,54) is defined as an axial length between the flange surface and the hard stop (60) at a position where the movable brake pad first makes contact with the floating brake disk (16);
wherein the first length (50) is longer than the second length (52).

4. The brake for an aircraft according to claim 3, wherein the thermal fuse has an axial length, wherein the axial length of the thermal fuse is equal to or greater than the first axial length (50).

5. The brake for an aircraft according to any preceding claim, wherein the thermal fuse (26) comprises a eutectic material; wherein the fusing temperature, T, is a melting temperature of the eutectic material.

6. The brake for an aircraft according to any of claims 1 to 4, wherein the thermal fuse (26) comprises a continuous-fibre reinforced composite, CFRC, material that comprises:
one or more fibres, and
a resin having a glass transition temperature, Tg;
wherein the fusing temperature, T, is the glass transition temperature, Tg;
wherein the resin is a thermoplastic resin or wherein the resin is a thermoset resin.

7. The brake for an aircraft according to claim 6, wherein the thermal fuse further comprises a thermally conductive material (32) extending at least partially along a length of the thermal fuse;
wherein the thermally conductive material is selected to have a higher thermal conductivity than a thermal conductivity of the CFRC material.

8. The brake for an aircraft according to any preceding claim, wherein the thermal fuse is in direct physical contact with the static brake pad (14).

9. The brake for an aircraft according to any of claims 1 to 7, further comprising:
a member (72,94) in abutment with the static brake pad (14), whereby, in an initial position, the member abuts the static brake pad (14) and prevents axial movement of the static brake pad (14) relative to the housing;
a spring (76,92) arranged to bias the member away from the initial position and towards a second position in which the member (72,94) no longer prevents axial movement of the brake pad relative to the housing;
wherein the thermal fuse (26) is arranged to hold the member in the initial position, against the bias of the spring, until the thermal fuse fuses.

10. The brake for an aircraft according to claim 9, wherein the second position is radially inwards, towards the shaft axis (X), from the initial position, and wherein the member (72,94) has a slanted face such that a radially outward portion of the member, radially outward from the shaft axis (X), is spaced apart from the static brake pad (14) in the initial position.

11. The brake for an aircraft according to claim 9 or 10, wherein the member is a first end (72a) of a rod (72);
wherein the rod is arranged to be pivotable, under the bias from the spring (76) around a pivot (74);
wherein the thermal fuse (26) is arranged to hold the rod in the initial position until the thermal fuse (26) fuses; and
wherein the spring (76) is arranged to bias the rod (72) to pivot around the pivot point (74) to the second position after the thermal fuse (26) has fused.

12. The brake for an aircraft according to claim 9 or 10, wherein the member is a piston (94), and wherein the spring (92) is arranged within the housing (22) to bias the piston radially inwards towards the shaft axis (X);
wherein the thermal fuse (26) is arranged radially inward of, and in abutment with, the piston when the piston is in the initial position.

13. The brake for an aircraft according to any preceding claim, comprising a plurality of thermal fuses (26), located at a plurality of positions around a circumference of the static brake pad (14).

14. A method of operating the brake for an aircraft of any preceding claim, the method including:
mounting the thermal fuse (26) in the housing (22) to fix the static brake pad (14) while the thermal fuse is unfused, and
fusing the thermal fuse using heat generated between the static brake pad and the floating brake disk (16) to allow the static brake pad to move axially relative to the housing away from the floating brake disk.

## Patentansprüche

1. Bremse (10, 70, 90) für ein Flugzeug, wobei die Bremse Folgendes umfasst:
ein Gehäuse (22);
eine Welle (12), die eine Achse (X) definiert und sich in das Gehäuse erstreckt;
eine schwimmend gelagerte Bremsscheibe (16), die so angeordnet ist, dass sie sich mit der Welle dreht, und so angeordnet ist, dass sie innerhalb des Gehäuses (22) entlang der Achse (X) axial beweglich ist;
einen statischen Bremsbelag (14), der auf einer ersten Seite (16a) der schwimmend gelagerten Bremsscheibe (16) angeordnet ist;
einen beweglichen Bremsbelag (18), der auf einer zweiten, gegenüberliegenden Seite (16b) der schwimmend gelagerten Bremsscheibe (16) angeordnet ist;
Vorspannmittel (20) zum Bewegen des beweglichen Bremsbelags relativ zu dem Gehäuse, um den beweglichen Bremsbelag gegen die schwimmend gelagerte Bremsscheibe zu drücken und dadurch die schwimmend gelagerte Bremsscheibe gegen den statischen Bremsbelag (14) zu drücken, um eine Bremskraft auf die schwimmend gelagerte Bremsscheibe auszuüben;
wobei die Bremse (10, 70, 90) für ein Flugzeug **dadurch gekennzeichnet ist, dass** sie ferner Folgendes umfasst:
eine thermische Sicherung (26) in thermischem Kontakt mit dem statischen Bremsbelag (14), wobei die thermische Sicherung eine Schmelztemperatur T aufweist, oberhalb derer die thermische Sicherung schmilzt,
wobei die thermische Sicherung so angeordnet ist, dass, bevor sie schmilzt, der statische Bremsbelag relativ zu dem Gehäuse axial fixiert ist und,
nachdem sie geschmolzen ist, sich der statische Bremsbelag axial relativ zu dem Gehäuse frei von der schwimmend gelagerten Bremsscheibe weg bewegen kann.

2. Bremse für ein Flugzeug nach Anspruch 1, wobei die schwimmend gelagerte Bremsscheibe (16) relativ zu der Welle (12) axial beweglich ist und wobei die Welle (12) relativ zu dem Gehäuse (22) axial fixiert ist; oder
wobei die schwimmend gelagerte Bremsscheibe axial an der Welle (12) befestigt oder einstückig mit der Welle (12) ausgebildet ist und wobei die Welle (12) relativ zu dem Gehäuse (22) axial beweglich ist.

3. Bremse für ein Flugzeug nach Anspruch 1 oder 2, wobei sich der statische Bremsbelag entlang einer ersten axialen Länge (50) axial frei bewegen kann, nachdem die thermische Sicherung (26) geschmolzen ist;
wobei in dem Gehäuse an einer Stelle axial zwischen dem statischen Bremsbelag (14) und dem beweglichen Bremsbelag (18) ein harter Anschlag (60) ausgebildet ist,
wobei der bewegliche Bremsbelag (18) einen Flansch (18c) mit einer Flanschfläche umfasst, die axial ausgerichtet und dem harten Anschlag (60) zugewandt angeordnet ist, sodass sich der Flansch (18c) nicht axial über den harten Anschlag hinaus bewegen kann;
wobei eine zweite axiale Länge (52, 54) als eine axiale Länge zwischen der Flanschfläche und dem harten Anschlag (60) an einer Position definiert ist, an der der bewegliche Bremsbelag erstmals mit der schwimmend gelagerten Bremsscheibe (16) in Kontakt kommt;
wobei die erste Länge (50) länger ist als die zweite Länge (52).

4. Bremse für ein Flugzeug nach Anspruch 3, wobei die thermische Sicherung eine axiale Länge aufweist, wobei die axiale Länge der thermischen Sicherung gleich oder größer als die erste axiale Länge (50) ist.

5. Bremse für ein Flugzeug nach einem der vorhergehenden Ansprüche, wobei die thermische Sicherung (26) ein eutektisches Material umfasst; wobei die Schmelztemperatur T die Schmelztemperatur des eutektischen Materials ist.

6. Bremse für ein Flugzeug nach einem der Ansprüche 1 bis 4, wobei die thermische Sicherung (26) ein endlosfaserverstärktes Verbundmaterial (continuous-fibre reinforced composite - CFRC) umfasst, das Folgendes umfasst:
eine oder mehrere Fasern und
ein Harz mit einer Glasübergangstemperatur Tg;
wobei die Schmelztemperatur T die Glasübergangstemperatur Tg ist;
wobei das Harz ein thermoplastisches Harz ist oder wobei das Harz ein duroplastisches Harz ist.

7. Bremse für ein Flugzeug nach Anspruch 6, wobei die thermische Sicherung ferner ein wärmeleitendes Material (32) umfasst, das sich mindestens teilweise entlang einer Länge der thermischen Sicherung erstreckt;
wobei das wärmeleitende Material so ausgewählt ist, dass es eine höhere Wärmeleitfähigkeit als die Wärmeleitfähigkeit des CFRC-Materials aufweist.

8. Bremse für ein Flugzeug nach einem der vorhergehenden Ansprüche, wobei die thermische Sicherung in direktem physikalischen Kontakt mit dem statischen Bremsbelag (14) steht.

9. Bremse für ein Flugzeug nach einem der Ansprüche 1 bis 7, ferner Folgendes umfassend:
ein Element (72, 94), das an dem statischen Bremsbelag (14) anliegt, wobei das Element in einer Ausgangsposition an dem statischen Bremsbelag (14) anliegt und eine axiale Bewegung des statischen Bremsbelags (14) relativ zu dem Gehäuse verhindert;
eine Feder (76, 92), die so angeordnet ist, dass sie das Element von der Ausgangsposition weg und in Richtung einer zweiten Position vorspannt, in der das Element (72, 94) eine axiale Bewegung des Bremsbelags relativ zu dem Gehäuse nicht mehr verhindert;
wobei die thermische Sicherung (26) so angeordnet ist, dass sie das Element gegen die Vorspannung der Feder in der Ausgangsposition hält, bis die thermische Sicherung schmilzt.

10. Bremse für ein Flugzeug nach Anspruch 9, wobei die zweite Position von der Ausgangsposition radial weiter nach innen in Richtung der Wellenachse (X) liegt und wobei das Element (72, 94) eine schräge Fläche aufweist, sodass ein radial nach außen gerichteter Abschnitt des Elements, der sich radial außerhalb der Wellenachse (X) befindet, in der Ausgangsposition von dem statischen Bremsbelag (14) beabstandet ist.

11. Bremse für ein Flugzeug nach Anspruch 9 oder 10, wobei das Element ein erstes Ende (72a) einer Stange (72) ist;
wobei die Stange so angeordnet ist, dass sie unter der Vorspannung der Feder (76) um einen Drehpunkt (74) schwenkbar ist;
wobei die thermische Sicherung (26) so angeordnet ist, dass sie die Stange in der Ausgangsposition hält, bis die thermische Sicherung (26) geschmolzen ist; und
wobei die Feder (76) so angeordnet ist, dass sie die Stange (72) so vorspannt, dass sie um den Drehpunkt (74) in die zweite Position schwenkt, nachdem die thermische Sicherung (26) geschmolzen ist.

12. Bremse für ein Flugzeug nach Anspruch 9 oder 10, wobei das Element ein Kolben (94) ist und wobei die Feder (92) innerhalb des Gehäuses (22) angeordnet ist, um den Kolben radial nach innen in Richtung der Wellenachse (X) vorzuspannen;
wobei die thermische Sicherung (26) radial nach innen von dem Kolben und anliegend an diesem angeordnet ist, wenn sich der Kolben in der Ausgangsposition befindet.

13. Bremse für ein Flugzeug nach einem der vorhergehenden Ansprüche, die eine Vielzahl von thermischen Sicherungen (26) umfasst, die an einer Vielzahl von Positionen um einen Umfang des statischen Bremsbelags (14) herum angeordnet ist.

14. Verfahren zum Betätigen der Bremse für ein Flugzeug nach einem der vorhergehenden Ansprüche, wobei das Verfahren Folgendes umfasst:
Montieren der thermischen Sicherung (26) in dem Gehäuse (22), um den statischen Bremsbelag (14) zu fixieren, während die thermische Sicherung nicht geschmolzen ist, und
Schmelzen der thermischen Sicherung unter Verwendung der zwischen dem statischen Bremsbelag und der schwimmend gelagerten Bremsscheibe (16) erzeugten Wärme, um eine axiale Bewegung des statischen Bremsbelags relativ zu dem Gehäuse von der schwimmend gelagerten Bremsscheibe weg zu ermöglichen.

## Revendications

1. Frein (10, 70, 90) pour un aéronef, le frein comprenant :
un boîtier (22) ;
un arbre (12) définissant un axe (X) et se prolongeant dans le boîtier ;
un disque de frein flottant (16) agencé pour tourner avec l'arbre et agencé pour être mobile axialement, le long de l'axe (X), à l'intérieur du boîtier (22) ;
une plaquette de frein statique (14) disposée sur un premier côté (16a) du disque de frein flottant (16) ;
une plaquette de frein mobile (18) disposée sur un second côté opposé (16b) du disque de frein flottant (16) ;
des moyens de rappel (20) pour déplacer la plaquette de frein mobile par rapport au boîtier pour presser la plaquette de frein mobile contre le disque de frein flottant, et ainsi presser le disque de frein flottant contre la plaquette de frein statique (14) pour appliquer une force de freinage au disque de frein flottant ;
le frein (10, 70, 90) pour un aéronef, **caractérisé en ce qu'**il comprend également :
un fusible thermique (26) en contact thermique avec la plaquette de frein statique (14), le fusible thermique ayant une température de fusion, T, au-dessus de laquelle le fusible thermique fond,
dans lequel le fusible thermique est disposé de telle sorte que, avant de fondre, la plaquette de frein statique est fixée axialement par rapport au boîtier, et
après sa fusion, la plaquette de frein statique est libre de se déplacer axialement par rapport au boîtier, en s'éloignant du disque de frein flottant.

2. Frein pour aéronef selon la revendication 1, dans lequel le disque de frein flottant (16) est mobile axialement par rapport à l'arbre (12), et dans lequel l'arbre (12) est fixe axialement par rapport au boîtier (22) ; ou
dans lequel le disque de frein flottant est fixé axialement à l'arbre (12) ou formé d'un seul tenant avec l'arbre (12), et dans lequel l'arbre (12) est mobile axialement par rapport au boîtier (22).

3. Frein pour aéronef selon la revendication 1 ou 2, dans lequel la plaquette de frein statique est libre de se déplacer axialement le long d'une première longueur axiale (50) après la fusion du fusible thermique (26) ;
dans lequel une butée dure (60) est formée dans le boîtier à un emplacement axialement entre la plaquette de frein statique (14) et la plaquette de frein mobile (18),
dans lequel la plaquette de frein mobile (18) comprend une bride (18c) ayant une surface de bride disposée axialement alignée avec et faisant face à la butée dure (60) de telle sorte que la bride (18c) ne puisse pas se déplacer axialement au-delà de la butée dure ;
dans lequel une seconde longueur axiale (52, 54) est définie comme une longueur axiale entre la surface de bride et la butée dure (60) à une position où la plaquette de frein mobile entre en premier contact avec le disque de frein flottant (16) ; dans lequel la première longueur (50) est plus longue que la seconde longueur (52).

4. Frein pour aéronef selon la revendication 3, dans lequel le fusible thermique présente une longueur axiale, la longueur axiale du fusible thermique étant égale ou supérieure à la première longueur axiale (50).

5. Frein pour aéronef selon l'une quelconque des revendications précédentes, dans lequel le fusible thermique (26) comprend un matériau eutectique ; dans lequel la température de fusion, T, est une température de fusion du matériau eutectique.

6. Frein pour aéronef selon l'une quelconque des revendications 1 à 4, dans lequel le fusible thermique (26) comprend un matériau composite renforcé par des fibres continues, CFRC, qui comprend :
une ou plusieurs fibres, et
une résine ayant une température de transition vitreuse, Tg ;
dans laquelle la température de fusion, T, est la température de transition vitreuse, Tg ;
dans lequel la résine est une résine thermoplastique ou dans lequel la résine est une résine thermodurcissable.

7. Frein pour aéronef selon la revendication 6, dans lequel le fusible thermique comprend en outre un matériau thermiquement conducteur (32) se prolongeant au moins partiellement le long d'une longueur du fusible thermique ;
dans lequel le matériau thermiquement conducteur est sélectionné pour avoir une conductivité thermique supérieure à celle du matériau CFRC.

8. Frein pour aéronef selon l'une quelconque des revendications précédentes, dans lequel le fusible thermique est en contact physique direct avec la plaquette de frein statique (14).

9. Frein pour aéronef selon l'une quelconque des revendications 1 à 7, comprenant également :
un élément (72, 94) en butée contre la plaquette de frein statique (14), de sorte que, dans une position initiale, l'élément vient en butée contre la plaquette de frein statique (14) et empêche le mouvement axial de la plaquette de frein statique (14) par rapport au boîtier ;
un ressort (76, 92) agencé pour solliciter l'élément loin de la position initiale et vers une seconde position dans laquelle l'élément (72, 94) n'empêche plus le mouvement axial de la plaquette de frein par rapport au boîtier ;
dans lequel le fusible thermique (26) est agencé pour maintenir l'élément dans la position initiale, contre le rappel du ressort, jusqu'à ce que le fusible thermique fusionne.

10. Frein pour aéronef selon la revendication 9, dans lequel la seconde position est radialement vers l'intérieur, vers l'axe de l'arbre (X), à partir de la position initiale, et dans lequel l'élément (72, 94) a une face inclinée de telle sorte qu'une partie radialement vers l'extérieur de l'élément, radialement vers l'extérieur à partir de l'axe de l'arbre (X), est espacée de la plaquette de frein statique (14) dans la position initiale.

11. Frein pour aéronef selon la revendication 9 ou 10, dans lequel l'élément est une première extrémité (72a) d'une tige (72) ;
dans lequel la tige est agencée pour pouvoir pivoter, sous le rappel du ressort (76) autour d'un pivot (74) ;
dans lequel le fusible thermique (26) est disposé pour maintenir la tige dans la position initiale jusqu'à ce que le fusible thermique (26) fonde ; et
dans lequel le ressort (76) est agencé pour rappeler la tige (72) pour pivoter autour du point de pivot (74) vers la deuxième position après la fusion du fusible thermique (26).

12. Frein pour un aéronef selon la revendication 9 ou 10, dans lequel l'élément est un piston (94), et dans lequel le ressort (92) est disposé à l'intérieur du boîtier (22) pour rappeler le piston radialement vers l'intérieur en direction de l'axe de l'arbre (X) ;
dans lequel le fusible thermique (26) est disposé radialement à l'intérieur du piston et en butée avec celui-ci lorsque le piston est dans la position initiale.

13. Frein pour aéronef selon l'une quelconque des revendications précédentes, comprenant une pluralité de fusibles thermiques (26), situés à une pluralité de positions autour d'une circonférence de la plaquette de frein statique (14).

14. Procédé de fonctionnement du frein pour un aéronef selon l'une quelconque des revendications précédentes, le procédé comprenant :
monter le fusible thermique (26) dans le boîtier (22) pour fixer la plaquette de frein statique (14) pendant que le fusible thermique n'est pas fusionné, et
fusion du fusible thermique en utilisant la chaleur générée entre la plaquette de frein statique et le disque de frein flottant (16) pour permettre à la plaquette de frein statique de se déplacer axialement par rapport au boîtier en s'éloignant du disque de frein flottant.
